Europäisches Patentamt

European Patent Office

Office européen des brevets

(19)

(11) Veröffentlichungsnummer: **0 308 908 B1**

(12) **EUROPÄISCHE PATENTSCHRIFT**

(45) Veröffentlichungstag der Patentschrift: **25.03.92**

(21) Anmeldenummer: **88115510.5**

(22) Anmeldetag: **21.09.88**

Teilanmeldung 91105233.0 eingereicht am 21/09/88.

(51) Int. Cl.⁵: **B23P 13/00**, B23P 21/00

(54) **Verfahren zum Herstellen eines bezüglich eines zweiten Gegenstandes hochgenau festlegbaren ersten Gegenstandes.**

(30) Priorität: **24.09.87 DE 3732206**
**26.04.88 DE 3814102**

(43) Veröffentlichungstag der Anmeldung:
**29.03.89 Patentblatt 89/13**

(45) Bekanntmachung des Hinweises auf die Patenterteilung:
**25.03.92 Patentblatt 92/13**

(84) Benannte Vertragsstaaten:
**AT CH DE ES FR GB IT LI NL SE**

(56) Entgegenhaltungen:
**EP-A- 0 030 042      DE-A- 2 922 639**
**DE-A- 3 114 485      DE-A- 3 618 435**
**US-A- 4 360 956      US-A- 4 590 783**

(73) Patentinhaber: **Büchler B-SET AG**
**Wiler Strasse 98**
**CH-9230 Flawil(CH)**

(72) Erfinder: **Büchler, René**
**Weidweg 2**
**CH-9345 Oberbüren(CH)**

(74) Vertreter: **EGLI-EUROPEAN PATENT ATTOR-**
**NEYS**
**Widenmayerstrasse 5**
**W-8000 München 22(DE)**

Rank Xerox (UK) Business Services

## Beschreibung

Die vorliegende Erfindung betrifft ein Verfahren zum Herstellen einer Palette, die bezüglich ihrer räumlichen Lage bei Anlage gegen einen Maschinentisch hochgenau festlegbar ist, sowie eine derartige Palette.

Aus dem DE-U-87 01 619.2 der Anmelderin ist bereits eine Vorrichtung zum wiederholbaren, hochgenauen Festlegen der räumlichen Lage eines ersten Gegenstandes in Bezug auf einen zweiten Gegenstand bekannt, bei der die erste Vorrichtung insbesondere die Form einer ein Werkstück tragenden Palette und der zweite Gegenstand die Form eines Trägers oder Maschinentisches einer Werkzeugmaschine hat. Die Palette weist eine Anzahl von in einer Ebene angeordneten, winkelmäßig gleichmäßig voneinander in der Ebene beabstandeten Zentrierzapfen auf, die bei Anlage der Palette gegen den Träger oder Maschinentisch mit entsprechenden Ausnehmungen des Trägers oder Maschinentisches eine hochgenaue gegenseitige räumliche Festlegung dieser Teile bewirken. Sowohl die Palette wie auch der Träger beziehungsweise der Maschinentisch sind aus einem hochwertigen Maschinenstahl gefertigt. Da auch bei einer hochgenauen Herstellung sowohl der Palette als auch des Maschinentisches geringfügige Abweichungen der Zentrierzapfen von der Lage der Ausnehmungen des Maschinentisches unvermeidbar sind, ist bei der bekannten Vorrichtung vorgesehen, daß die Ausnehmungen im Träger beziehungsweise Maschinentisch mit Nuten versehene Führungsseitenwände haben, die beim Einführen der Zentrierzapfen in die Nuten elastisch federnd gegen den Zentrierzapfen anliegend ausweichen. Die Notwendigkeit der im Mikrometerbereich federnd nachgebend ausgestalteten Führungswände zum Ausgleich von Abweichungen zwischen einer idealen Lage der Zentrierzapfen der Palette und der tatsächlich durch die Herstellung erreichten Lage macht einerseits einen relativ aufwendigen Maschinentisch nötig. Andererseits ist die Herstellung der Paletten, von denen für jede Werkzeugmaschine eine relativ hohe Zahl benötigt wird, aufgrund des aufwendig zu bearbeitenden Maschinenstahles relativ kostspielig. Eine weitere Problematik in der Handhabung der bekannten Vorrichtung ergibt sich aus dem relativ hohen Gewicht der aus Maschinenstahl gefertigten Paletten.

Aus dem europäischen Patent 0 111 092 ist bereits ein Maschinentisch für Werkzeugmaschinen mit einer Aufnahme für Paletten bekannt, wobei die Paletten wenigstens zwei Zentrierzapfen aufweisen, die bei Aufsetzen der Paletten auf den Maschinentisch in Ausnehmungen einer auf dem Maschinentisch befestigten, von diesem in vertikaler Richtung beabstandeten Federstahlscheibe eingreifen. Die Ausnehmungen sind derart ausgestaltet, daß bei Einsetzen der Zentrierzapfen der Palette in die Ausnehmungen der Federstahlscheibe ein vertikales Ausweichen der Randbereiche der Federstahlscheibe nach Einsetzen der Zentrierzapfen stattfindet, so daß die Randbereiche der Federstahlscheibe gleichzeitig mit dem vertikalen Ausweichen gegenüber den Zentrierzapfen horizontal zurückweichen. Daher kann die Federstahlscheibe Ungenauigkeiten der Palette in der Lage ihrer Zentrierzapfen zueinander ebenso ausgleichen wie eine Zentrierung der Lage der Palette gegenüber dem Maschinentisch herbeiführen. Irgendwelche Hinweise darauf, wie eine Zentrierung der Palette gegenüber dem Maschinentisch ohne eine derartige, relativ aufwendige Federstahlscheibe erreicht werden kann, sind diesem europäischen Patent nicht zu entnehmen.

Das Prinzip der Zentrierung einer Palette gegenüber einem Maschinentisch mittels eines elastisch federnden Elementes, das an Zentrierzapfen anliegt, ist an sich schon lange bekannt, wie beispielsweise die deutsche Patentschrift 12 57 496 zeigt, die als eine Ausführungsform des federnden Elementes einen zwischen Flanschen eingespannten, ebenfalls in horizontaler und vertikaler Richtung ausweichenden biegsamen Draht zur Anlage an Zentrierzapfen offenbart. Auch in dieser Druckschrift wird es offenbar als nötig angesehen, separate Federelemente zum Toleranzausgleich zwischen einer festen Kupplungshälfte und einer aufsetzbaren Kupplungshälte beziehungsweise -palette zu verwenden.

Gegenüber diesem Stand der Technik liegt der vorliegenden Erfindung die Aufgabe zugrunde, ein Verfahren zum Herstellen einer Palette gemäß dem Oberbegriff des Anspruches 1 so weiterzubilden, daß trotz reduziertem Herstellungsaufwand für das Herstellen des ersten Gegenstandes eine hohe Positionierungsgenauigkeit des ersten Gegenstandes gegenüber dem zweiten Gegenstand gewährleistet ist.

Diese Aufgabe wird bei einem Verfahren nach dem Oberbegriff des Anspruchs 1 durch die im kennzeichnenden Teil des Anspruchs 1 angegebenen Merkmale gelöst.

Ferner liegt der Erfindung die Aufgabe zugrunde, eine Vorrichtung nach dem Oberbegriff des Anspruchs 11 so weiterzubilden, daß bei vereinfachter Herstellbarkeit der Palette dessen hochgenaue Positionierbarkeit gegenüber dem Maschinentisch gewährleistet ist.

Diese Aufgabe wird bei den Vorrichtungen nach dem jeweiligen Oberbegriff des Anspruchs 11 durch die im kennzeichnenden Teil dieses Anspruchs angegebenen Merkmale gelöst.

Nachfolgend werden unter Bezugnahme auf die beigefügten Zeichnungen bevorzugte Ausführungsbeispiele der vorliegenden Erfindung näher erläutert. Es zeigen:

Fig. 1    eine Seitenansicht einer ersten Ausführungsform einer erfindungsgemäßen Palette,

Fig. 2    eine Schnittdarstellung der in Fig. 1 gezeigten Ausführungsform längs der Linie II-II;

Fig. 3    eine Schnittdarstellung eines Zentrierzapfens und einer Nut einer erfindungsgemäßen Palette;

Fig. 4    eine der Fig. 3 entsprechende Schnittdarstellung mit abgewandelter Ausgestaltung des Zentrierzapfens;

Fig. 5    eine untere Ansicht einer Palette;

Fig. 6    eine Schnittdarstellung durch die in Fig. 5 gezeigte Palette längs der Linie VI-VI;

Fig. 7    eine untere Ansicht einer weiteren Palette;

Fig. 8    eine Schnittdarstellung durch die in Fig. 7 gezeigte Palette längs der Linie VIII-VIII;

Fig. 9    eine perspektivische Darstellung einer weiteren Palette mit einem Aufsatzteil zum Einspannen von Werkstücken in verschiedenen räumlichen Lagen;

Fig. 10    eine Schnittdarstellung durch das Aufsatzteil der in Fig. 9 gezeigten Palette längs der Linie X-X;

Fig. 11    eine Draufsicht auf einen Träger mit Palette;

Fig. 12    eine Querschnittsdarstellung des in Fig. 11 gezeigten Trägers und in gestrichelter Darstellung von verschiedenen Paletten;

Fig. 13    eine Querschnittsansicht eines Details eines Trägers;

Fig. 14    eine Draufsicht auf einen weiteren Träger mit Paletten;

Fig. 15    eine spezifische Ausgestaltung eines Trägers mit Zwischenstück und mehreren, räumlich angeordneten Paletten und

Fig. 16    eine perspektivische Explosionsdarstellung eines Trägers.

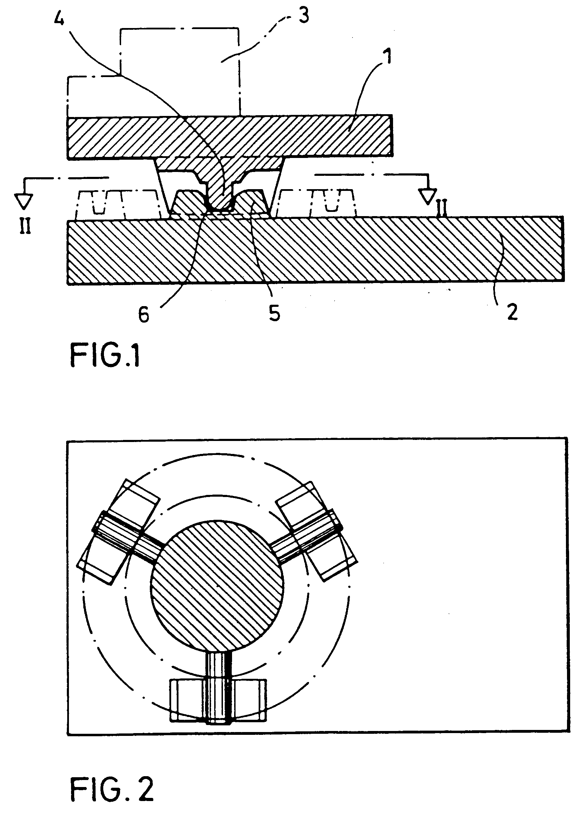

Nachfolgend soll unter Bezugnahme auf Fig. 1 eine gemäß dem erfindungsgemäßen Verfahren herstellbare Palette 1 betrifft, die gegenüber einem Träger 2 oder Maschinentisch 2 einer Werkzeugmaschine (nicht dargestellt) in ihrer räumlichen Lage bei Anlage gegen den Träger oder Maschinentisch 2 hochgenau festlegbar ist. Die Palette 1 dient zum Aufnehmen eines Werkstücks 3, das mit der (nicht gezeigten) Werkzeugmaschine zu bearbeiten ist. Das Werkstück 3 wird vor dem Aufsetzen der Palette 1 auf den Träger oder Maschinentisch 2 gegenüber der Palette 1 an einem sogenannten Einrichtplatz außerhalb der Werkzeugmaschine präzise ausgerichtet und sodann an der Palette 1 gespannt. Der (nicht gezeigte) Einrichtplatz hat ein (ebenfalls nicht gezeigtes) Kupplungsteil zum Aufnehmen der Palette. Am Einrichtplatz wird die Lage des Werkstückes 3 gegenüber diesem ortsfesten Kupplungsteil hochgenau definiert. Hierbei kann die relative Lage der Palette 1 zum Werkstück 3 und zu dem ortsfesten Kupplungsteil ungenau sein, solange nur gewährleistet ist, daß die Lage des Werkstückes 3 zu dem Kupplungsteil selbst hochpräzise ausgerichtet wird, da eine entsprechend hochpräzise Ausrichtung des Werkstückes 3 gegenüber dem Maschinentisch 2 bei Aufbringen der Palette 1 auf den Maschinentisch 2 wiederum eingenommen wird. Dies ist dadurch gewährleistet, daß an den Werkzeugmaschinen ein hochpräziser Maschinentisch 2 vorgesehen ist, der in seiner Ausgestaltung sehr genau dem Kupplungteil des Einrichtplatzes entspricht, so daß letztlich die relative Lage des Werkstückes 3 gegenüber dem Maschinentisch 2 der relativen Lage des Werkstückes 3 gegenüber dem Kupplungsteil des Einrichtplatzes entspricht.

Wie weiterhin in Fig. 1 ersichtlich ist, trägt die Palette 1 an ihrer Unterseite eine Mehrzahl von Zentrierzapfen 4, von denen einer in einer schemenhaften Querschnittsdarstellung in Fig. 1 zu erkennen ist. Ein jeder Zentrierzapfen 4 nimmt Eingriff mit einer lagerbockartigen Aufnahmeeinrichtung 5 des Maschinentisches 2, die eine Nut 6 aufweist. Sowohl die Zentrierzapfen 4 wie auch die den Zentrierzapfen 4 der Palette 1, wie auch die den Zentrierzapfen 4 zugeordneten lagerbockartigen Einrichtungen 5 des Maschinentisches 2 liegen jeweils in einer Ebene und sind innerhalb der Ebene in gleichmäßigen Winkelabständen gegeneinander versetzt.

Wie insbesondere in Fig. 2 zu sehen ist, sind bei einer gewählten Anzahl von drei Zentrierzapfen 4 diese in einem Winkelabstand von 120° gegeneinander versetzt. Entsprechend sind auch die lagerbockartigen Aufnahmeeinrichtungen 5 mit einem Winkelabstand von 120° zueinander angeordnet.

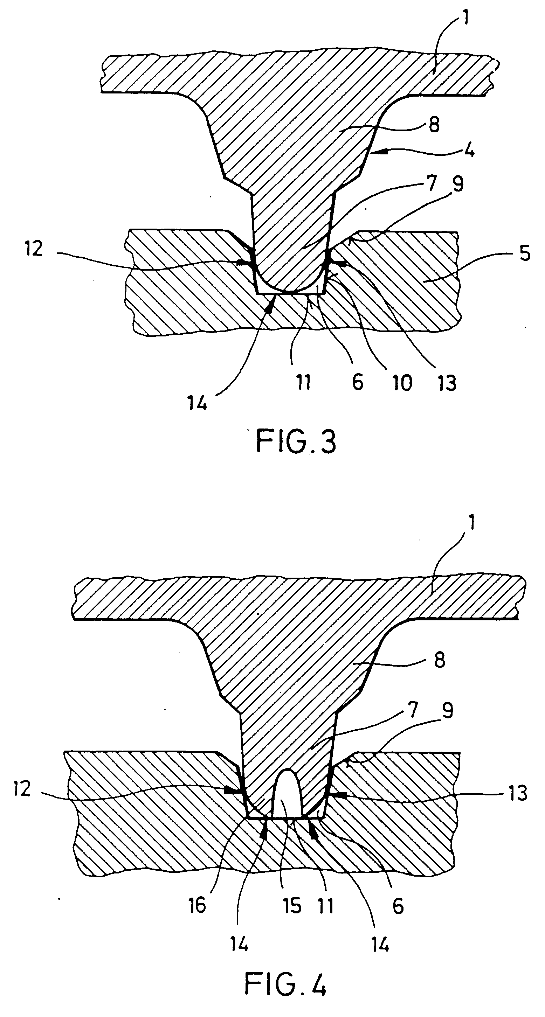

Wie in Fig. 3 detailliert dargestellt ist, hat der Zentrierzapfen ein abgerundetes Kopfteil 7, das über ein Fußteil 8 in die Palette 1 übergeht. Die in der lagerbockartigen Aufnahmeeinrichtung 5 eingearbeitete Nut 6 weitet sich an ihrem offenen Ende über konische Führungsflächen 9, die ein Einführen des Zentrierzapfens 4 in die Nut 6 erleichtern, auf. Die Nut 6 weist zwei konisch leicht nach außen geöffnete Flanken 10 sowie einen Boden 11 auf. Der Winkel der Nut 6 ist so dimensioniert, daß keine Selbsthemmung auftreten kann. Die Flanken 10 und der Boden 11 bilden mit dem Kopfteil 7 des Zentrierzapfens 4 zwei seitliche Anlageflächen 12, 13 sowie eine untere Fläche 14. Die seitlichen Anlageflächen 12, 13 definieren die Lage des Zentrierzapfens 4 in einer horizontalen Richtung. Die Vertikallage der Palette 1 wird dagegen durch lagerbockartige Vorsprünge (nicht dargestellt), die seitlich neben dem Zentrierzapfen 4 angeordnet sind sowie gegebenenfalls durch Gegenanschläge an der Aufnahmeeinrichtung 5 fixiert.

Eine derartige Lagefestlegung der jeweiligen Zentrierzapfen 4 der Palette 1 gegenüber den jeweiligen Nuten 6 des Maschinentisches 2 kann nur dann zu einer hochpräzisen gegenseitigen Ausrichtung führen, wenn die räumliche Lage der jeweiligen Anlageflächen 12, 13, 14 mit einer im Mikrometerbereich liegenden Genauigkeit sowohl seitens der Palette 1 wie auch seitens des Maschinentisches oder Trägers 2 eingehalten wird. Bei dem Maschinentisch 2 einer Werkzeugmaschine handelt es sich um ein aus hochwertigem Maschinenstahl gefertigtes Präzisionsteil, bei dem derartige Fertigungsgenauigkeiten eingehalten werden können. Demgegenüber handelt es sich bei der Palette um ein in relativ hohen Stückzahlen und verschiedenartigen Ausführungen benötigtes Teil, bei dem die geforderte Präzision durch das nachfolgend erläuterte, erfindungsgemäße Herstellungsverfahren erzielt wird.

Ein erster Herstellungsschritt bei der Anfertigung der Palette 1 ist das Hochdruckgießen der Palette 1 aus Aluminium oder einer Aluminiumlegierung. Wichtig ist, daß das für den Guß der Palette 1 verwendete Metall relativ weich ist und eine plastische Verformung erlaubt. Spröde Materialien kommen daher für das erfindungsgemäße Herstellungsverfahren nicht in Betracht.

Beim Aluminium-Hochdruckgießen der Palette wird eine Formgenauigkeit in der Größenordnung von 10 bis 50 Mikrometer, üblicherweise etwa 20 Mikrometer im Bereich der für die Positioniergenauigkeit allein relevanten Anlageflächen 12 bis 14 des Zentrierzapfens 4 erzielt.

In einem nächsten Verfahrensschritt wird die Palette 1 im Bereich der Anlageflächen 12 bis 14 kalibriert. Dieses Kalibrieren wird dadurch vorgenommen, daß die Palette 1 in ein Kalibrierwerkzeug (nicht dargestellt) eingedrückt wird, das aus einem harten Material, wie beispielsweise Werkzeugstahl, besteht, und zumindest im Bereich der Anlageflächen 12 bis 14 eine Negativform bezüglich der gewünschten Form der Anlageflächen 12 bis 14 der Zentrierzapfen 4 der Palette 1 aufweist. Bei dem Einpressen der Palette 1 in das Kalibrierwerkzeug erfahren die Anlageflächen 12 bis 14 eine plastische Materialverformung und gleichzeitig eine Materialverdichtung. Durch die plastische Deformation des Zentrierzapfens 4 im Bereich seiner Anlageflächen 12 bis 14 wird eine Formgenauigkeit der Anlageflächen 12 bis 14 in dem Bereich zwischen 1 und 5 Mikrometer, üblicherweise etwa 3 Mikrometer erzielt. Durch die Verfestigung wird gleichzeitig eine Erhöhung der mechanischen Widerstandsfähigkeit der Anlageflächen herbeigeführt.

In einem nächsten Verfahrensschritt wird auf die Palette 1 zumindest im Bereich der Anlageflächen 12 bis 14 eine Oberflächenbeschichtung aus einem harten Metall aufgebracht, was vorzugsweise durch Vernickeln oder Eloxieren zumindest der Anlageflächen 12 bis 14, vorzugsweise der Gesamtoberfläche der Palette 1 vorgenommen wird.

Wie bereits ausgeführt wurde, kann jedoch der Herstellungsschritt des Beschichtens der Anlageflächen mit einem harten Material, vorzugsweise durch Vernickeln, auch vor dem Herstellungsschritt des Kalibrierens ausgeführt werden.

Gleichfalls ist es möglich, die Oberflächenvergütung durch Aufbringen einer Oberflächenbeschichtung vollständig entfallen zu lassen. In diesem Fall begnügt man sich mit der durch das Kalibrieren erzielten Oberflächenverdichtung, die eine erhebliche Oberflächenfestigkeit liefert.

Als Ergebnis des oben beschriebenen Herstellungsverfahrens weist die nach dem erfindungsgemäßen Verfahren hergestellte erfindungsgemäße Palette 1 ein niedriges Gewicht bei hoher Formgenauigkeit im Mikrometerbereich auf, kann mit einem einfach beherrschbaren Aluminium-Hochdruckgußverfahren bei anschließendem Kalibrieren und Oberflächenvergüten mit niedrigem Kostenaufwand hergestellt werden und zeigt aufgrund der Oberflächenbeschichtung eine hervorragende Verschleißfestigkeit. Mit anderen Worten wird durch das erfindungsgemäße Herrstellungsverfahren bei niedrigem Herstellungsaufwand eine Formtreue und Verschleißfestigkeit erzielt, die bislang bei aus einem weichen Material gegossenen Gegenständen nicht erreicht wurde.

Aufgrund der gemäß der vorliegenden Erfindung erzielten hohen Formgenauigkeit der Anlageflächen genügt allein die Elastizität der Aluminiumpalette zum Ausgleich verbleibender relativer Verschiebungen aufgrund von Fertigungstoleranzen zwischen den jeweiligen Nuten 6 des Maschinentisches 2 und den Zentrierzapfen 4 der Palette 1. Hierdurch kann auf die Ausgestaltung von federelastischen Strukturen im Bereich des Maschinentisches 2 verzichtet werden.

Die federnde Wirkung der beiden Gegenstände zueinander wird also im wesentlichen durch deren Materialpaarung und dem jeweiligen Elastizitätsmodul des Materials der Gegenstände bewirkt.

Nichtsdestoweniger ist es jedoch auch möglich, zum Erhöhen der Elastizität den Zentrierzapfen 4 mit einer in seiner Längsrichtung verlaufenden Aussparung 15 oder einem in seiner Längsrichtung verlaufenden Schlitz 15 zu versehen, wodurch der Zentrierzapfen 4 in zwei einander gegenüberliegende Schultern 16 aufgeteilt wird, die eine Federelastizität des Zentrierzapfens 4 in seiner Querschnittsebene ermöglichen, wie dies in Fig. 4 zu sehen ist. Im übrigen bezeichnen die in Fig. 1 angegebenen Bezugszeichen mit Fig. 3 übereinstimmende Teile, so daß auf deren erneute Erläuterung verzichtet werden kann.

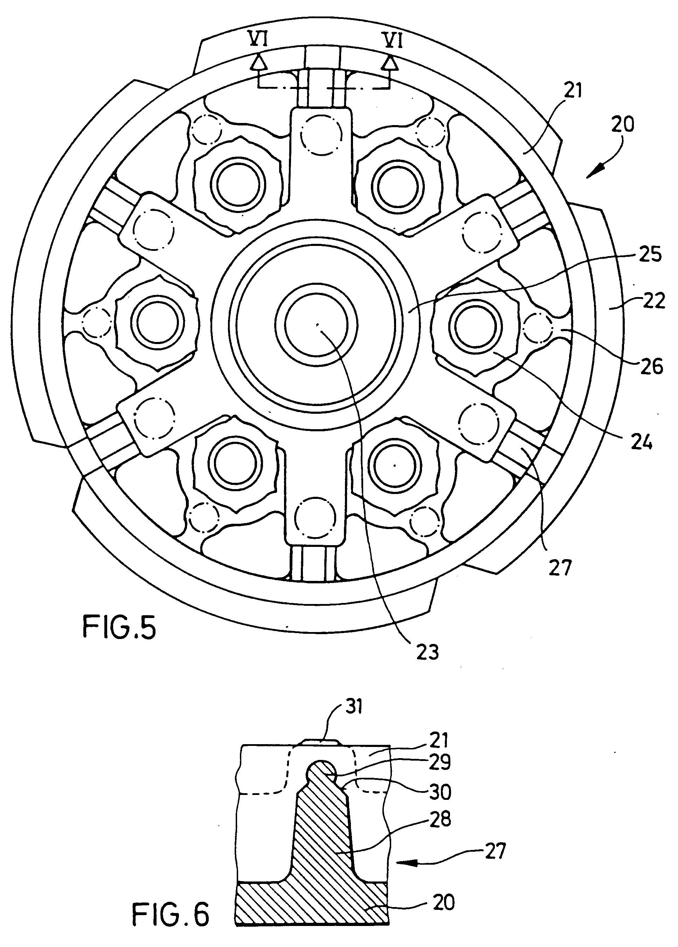

Fig. 5 zeigt eine Unteransicht einer ersten praktisch realisierten Ausführungsform einer Palette 20 mit einem mantelförmigen Randbereich 21, an den eine sektorförmige Umlaufnase 22 angrenzt. Die Palette 20 hat ferner ein zentrisches Gewinde 23. Die nachfolgend erläuterte Struktur der Palette 20 wiederholt sich für jeden Winkelsektor von jeweils 60° unter den insgesamt sechs Winkelsektoren. Zwischen einem inneren zylindrischen Mantel 25 und dem mantelförmigen Randbereich 21 liegt in jedem Sektor eine Mutternaufnahme 24, in der eine Sechskantmutter einfügbar ist. Der Randbereich der Mutternaufnahme 24 stützt sich durch einen radialen Steg 26 gegen den mantelförmigen Randbereich ab. Zwischen jeweils zwei Mutternaufnahmen 24 liegt ein Zentrierzapfen 27.

Fig. 6 zeigt eine Querschnittsdarstellung durch den Zentrierzapfen 27 der in Fig. 5 gezeigten Palette 20 längs der Linie VI-VI. Der Zentrierzapfen 27 geht aus der Palette 20 in ein Fußteil 28 über, das nach einem konischen Übergang 30 in dem abgerundeten Kopfteil 29 endet. Der zylindrische Randbereich 21 ist mit einem Höhenanschlag 31 versehen, der die vertikale Lage der Palette 20 gegenüber dem Maschinentisch 2 definiert. In dieser Ausgestaltung kommt also dem Zentrierzapfen 27 nur die Bedeutung der Drehpositionierung der Palette 20 gegenüber dem Maschinentisch 2 zu, während die vertikale Festlegung der Palette gegenüber dem Maschinentisch 2 durch den Höhenanschlag 31 vorgenommen wird.

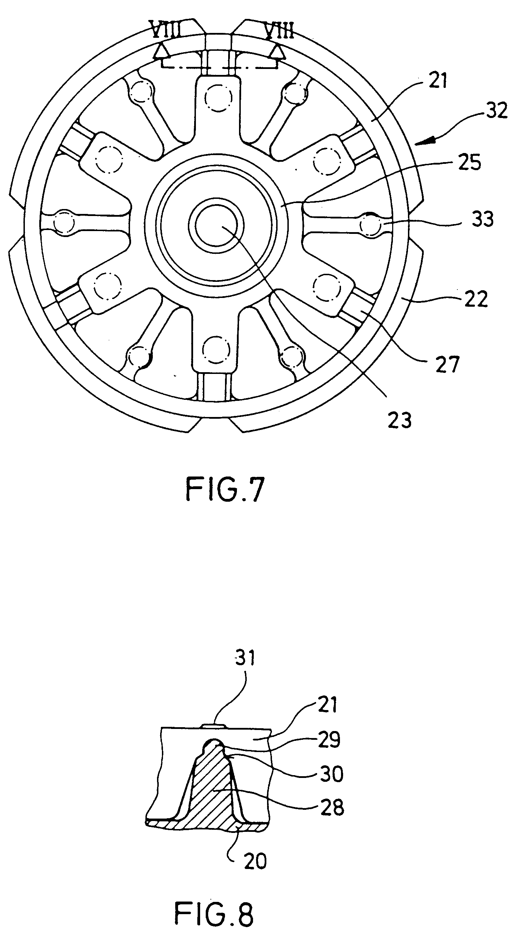

Die in Fig. 7 dargestellte, zweite Ausführungsform der Palette 20 stimmt weitgehend mit der in Fig. 5 dargestellten ersten Ausführungsform überein. Erneut bezeichnen gleiche Bezugszeichen übereinstimmende Teile. Somit kann die nachfolgende Erläuterung auf die Abweichungen zwischen der Palette 20 gemäß Fig. 5 und der Palette 32 gemäß Fig. 7 beschränkt werden. Bei der in Fig. 7 gezeigten Ausführungsform einer Palette 32 sind keine Mutternaufnahmen 24 vorgesehen, wie dies bei der Ausführungsform gemäß Fig. 5 der Fall ist. Die Radialstege 33 verlaufen dementsprechend zwischen dem mantelförmigen Randbereich 21 und dem inneren Mantel 25, der das zentrische Gewinde 23 umschließt. Im übrigen beschränken sich die Abweichungen zwischen der zweiten Palette 32 gemäß Fig. 7 und der ersten Ausführungsform der Palette 20 gemäß Fig. 5 darauf, daß die zweite Ausführungsform sowohl bezüglich ihres Durchmessers als auch bezüglich ihrer Höhe geringere Abmessungen hat.

Selbstverständlich kann eine Palette anstelle der in den Fig. 5 und 7 gezeigten rotationssymmetrischen Ausgestaltungen durch einen quadratischen, trapezförmigen oder rechteckigen Grundriß haben. Jedoch ist es auch bei einer derartigen Grundrißausgestaltung der Palette angezeigt, die jeweiligen Zentrierzapfen in gleichmäßigen Winkelabständen zueinander um einen Mittelpunkt oder zentrischen Punkt herum anzuordnen.

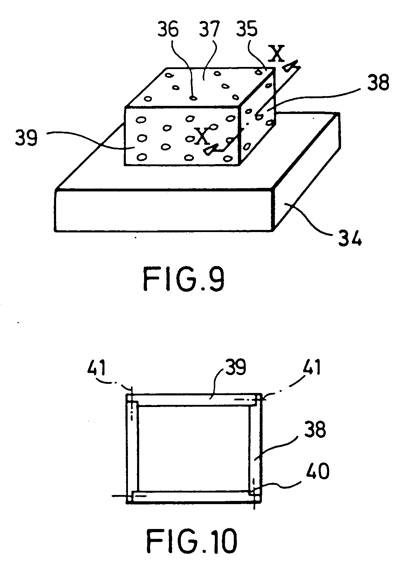

So ist beispielsweise bei der in Fig. 9 gezeigten dritten Ausführungsform einer Palette 34 eine rechteckförmige Grundfläche gewählt. Die Palette 34 trägt ein Aufsatzteil 35 in Form eines Quaders. Der Quader 35 ist sowohl an seiner Deckfläche 37 als auch an seinen Seitenflächen 38, 39 mit einer Mehrzahl von Gewinden 36 versehen, so daß ein Werkstück sowohl an der Deckfläche 37 wie auch an den Seitenflächen 38, 39 eingespannt werden kann.

Fig. 10 zeigt eine Querschnittsdarstellung durch das quaderförmige Aufsatzteil 35 längs der Linie X-X. Jede der Seitenflächen 38, 39 weist an ihrem mit der jeweils nächsten Seitenfläche in Berührung stehenden Bereich eine Ausnehmung 40 auf, die sich vorzugsweise über etwa die halbe Wandstärke der Seitenflächen 38, 39 erstreckt. An den mit den Bezugszeichen 41 bezeichneten Strichpunktierungen liegen Schraubverbindungen, mit denen die Seitenflächen 38, 39 gegeneinander verschraubt sind. Ebenfalls kommt eine gegenseitige Verklebung der Seitenflächen in Betracht.

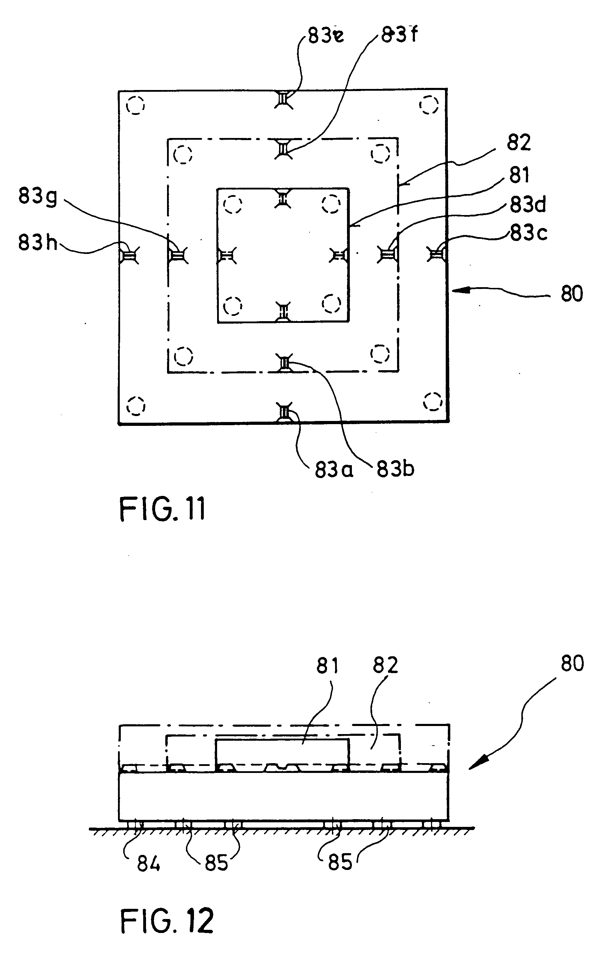

In Fig. 11 ist eine weitere Ausführungsform eines Trägers 80 für mehrere, verschieden große Paletten 81, 82 in Draufsicht gezeigt. Im wesentlichen entspricht diese Palette einer nicht rotationssymmetrischen Abwandlung des unter Bezugnahme auf Fig. 5 beschriebenen Ausführungsbeispieles. Der Träger 80 weist zur Aufnahme von verschieden großen Paletten, 81, 82 eine Vielzahl von lagerbockartigen Aufnahmeeinrichtungen 83a, 83b, 83c, 83d, 83e, 83f, 83g, 83h auf.

Wie in der Querschnittsdarstellung des Trägers 80 und der Paletten 82, 83 gemäß Fig. 12 zu sehen ist, hat der Träger 80 auf seiner Unterseite neben kombinierten Spannelement-Auflagen 84 auch nicht als Spannelement dienende Auflagen 85, die eine Durchbiegung des Trägers 80 bei schwerer Bearbeitung verhindern sollen.

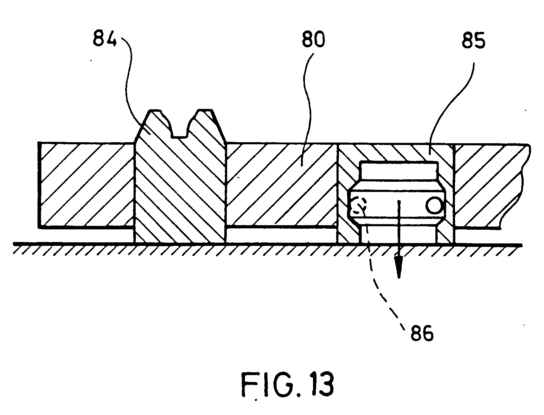

Wie die dataillierte Querschnittsdarstellung gemäß Fig. 13 zeigt, sind in dem aus Aluminium bestehenden Träger 80 sowohl die spannelementfreien, reinen Auflagen 84 aus einem verschleißfesten Material, wie beispielsweise Stahl eingegossen, wie auch die Auflagen 85, in die Spannelemente des Maschinentisches eingreifen. Die Spannelemente können durch Spannkugeln 86 gebildet werden, die an Kegelflächen der Spannelement-Auflagen 85 Angriff nehmen.

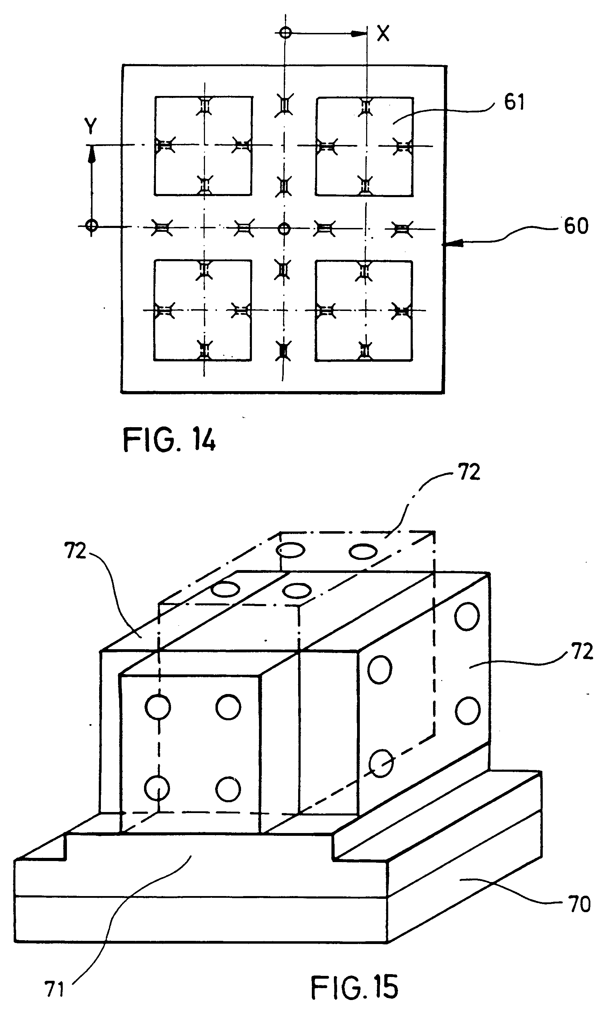

Fig. 14 zeigt eine gegenüber Fig. 11 geringfügig modifizierte Ausgestaltung eines Trägers 60 zur Aufnahme mehrerer Paletten 61. Bei dieser Ausführungsform wird eine hohe Repetiergenauigkeit für die Positionierung der Paletten 61 gegenüber dem Träger 60 in den Richtungen x, y erreicht.

Fig. 15 zeigt eine modifizierte Ausgestaltung des Ausführungsbeispieles von Fig. 9. Auf einer Palette 70 ist eine Zwischenaufnahme 71 festgelegt, die mit fünf verschiedenen Trägern 72 verbunden ist, die eine Befestigungsmöglichkeit in fünf der sechs verschiedenen Raumrichtungen ermöglichen. Im übrigen entspricht diese Ausführungsform der Ausführungsform nach Fig. 9.

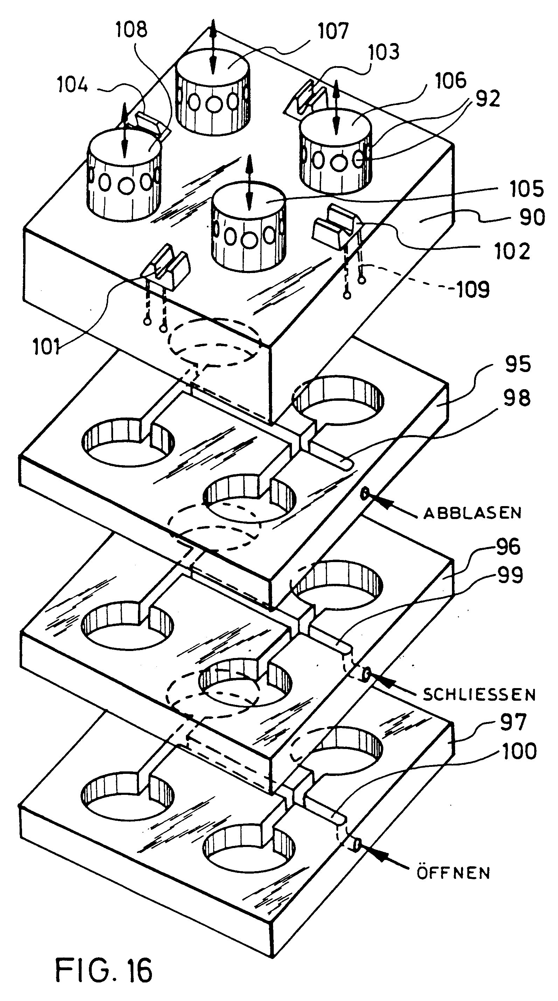

In Fig. 16 ist in einer Explosionsdarstellung ein sandwichartig aufgebauter Träger 90 gezeigt, der mit vier lagerbockartigen Aufnahmeinrichtungen 101, 102, 103, 104 versehen ist. Auf der Oberseite des Trägers sind zylinderförmige Spannkörper 105, 106, 107, 108 angeordnet, die mit hydraulisch, pneumatisch, mechanisch oder elektromechanisch betätigbaren Rastkugeln 92 ausgestattet sind. Zu den lagerbockartigen Aufnahmeinrichtungen 101 bis 104 führen Kanäle 109 für ein Abreinigungsmedium, das eine Abblasluft oder eine Flüssigkeit sein kann. Der Träger 90 hat drei sandwichartig übereinander angeordnete Teile 95, 96, 97, in denen jeweils ein Fluidröhrensystem 98, 99, 100 angeordnet ist. Das Fluidröhrensystem 98 des Teiles 95 führt Abblasluft zu den Kanälen 109 zum Abblasen der Auflageflächen der lagerbockartigen Aufnahmeeinrichtungen 101 bis 104 zu. Die Fluidröhrensysteme 99 und 100 der Teile 96, 97 dienen der Fluidzufuhr zum Schließen und Öffnen der Rastelemente 92. Durch diese mehrschichtige Ausgestaltung des Trägers 90 mit den Teilen 95 bis 97 kann eine sehr einfache Ausgestaltung der getrennten Leitungsnetze 98 bis 100 implementiert werden.

**Patentansprüche**

1. Verfahren zum Herstellen einer Palette, die bezüglich ihrer räumlichen Lage bei Anlage gegen einen Maschinentisch hochgenau festlegbar ist,
gekennzeichnet durch folgende Herstellungsschritte:
   - Metalldruckgießen, Sintern bzw. Fließpressen der Palette (1; 20; 32; 60; 70; 80) aus einem Leichtmetall, aus Messing, aus einer Zinklegierung oder aus einem Sintermaterial; und
   - Kalibrieren der Palette (1; 20; 32; 60; 70; 80) zumindest im Bereich von gewünschten Anlageflächen (12 bis 14) der Palette mit dem Maschinentisch (2) durch Eindrücken der Palette in ein Kalibrierwerkzeug, das aus einem bezüglich des Materials der Palette härteren Material besteht und das zumindest im Bereich der Anlageflächen (12 bis 14) eine Negativform bezüglich der gewünschten Form der Palette (1; 20; 32) aufweist, wobei die Palette zumindest im Bereich der Anlageflächen (12 bis 14) eine plastische Materialverformung erfährt.

2. Verfahren nach Anspruch 1, dadurch gekennzeichnet,
daß vor oder nach dem Herstellungsschritt des Kalibrierens die Oberfläche der Palette (1; 20; 32; 60; 70; 80) zumindest im Bereich ihrer Anlageflächen (12 bis 14) durch eine Oberflächenbehandlung weiter verfestigt wird.

3. Verfahren nach Anspruch 2, dadurch gekennzeichnet,
daß die Oberflächenbehandlung das Aufbringen einer verglichen mit dem Material der Palette harten metallischen Oberflächenbeschichtung beinhaltet.

4. Verfahren nach Anspruch 2, dadurch gekennzeichnet,
daß die Oberflächenbehandlung das Eloxieren der Palette (1; 20; 32; 60; 70; 80) beinhaltet.

5. Verfahren nach Anspruch 2, dadurch gekennzeichnet,
daß die Oberflächenbehandlung ein Kugelpolieren oder Kugelstrahlen der Palette (1; 20; 32; 60; 70; 80) zumindest im Bereich ihrer Anlageflächen (12 bis 14; 44, 45) mit dem Maschinentisch beinhaltet.

6. Verfahren nach einem der Ansprüche 1 bis 5, dadurch gekennzeichnet,
daß das Leichtmetall Aluminium oder eine Aluminiumlegierung ist.

7. Verfahren nach einem der Ansprüche 1 bis 6, dadurch gekennzeichnet,
daß die Palette (1; 20; 32; 60; 70; 80) beim Gießen im Bereich der Anlageflächen (12 bis 14) mit einer Genauigkeit von etwa 10 bis 50 $\mu$m, üblicherweise etwa 20 $\mu$m, gegossen wird, und
daß die Formgenauigkeit der Anlageflächen (12 bis 14) nach deren plastischer Verformung durch das Kalibrieren in dem Bereich zwischen 1 und 5 $\mu$m, üblicherweise etwa 3 $\mu$m, liegt.

8. Verfahren nach einem der Ansprüche 1 bis 3, dadurch gekennzeichnet,

daß die Oberflächenbeschichtung durch Vernickeln erzeugt wird.

9. Verfahren nach einem der Ansprüche 1 bis 8, dadurch gekennzeichnet, daß bei dem Verfahrensschritt des Kalibrierens während der plastischen Verformung der Anlageflächen (12 bis 14) eine Verdichtung des ersten Materials im Bereich der Anlageflächen erfolgt.

10. Vorrichtung mit einer bezüglich ihrer Lage bei Anlage gegen einen Maschinentisch hochgenau festlegbaren Palette, herstellbar nach einem Verfahren nach einem der Ansprüche 1 bis 9, dadurch gekennzeichnet,
daß die Palette (1; 20; 32; 60; 70; 80) derart ausgebildet ist, daß auf ihr ein zu bearbeitendes Werkstück (3) festlegbar ist,
daß zumindest ein Zentrierzapfen (4; 27) an der Palette (1; 20; 32; 60; 70; 80) vorgesehen ist, an dem wenigstens zwei Anlageflächen (12, 13) ausgebildet sind,
daß der Maschinentisch (2) aus einem gegenüber dem Material der Palette (1; 20; 32; 60; 70; 80) sehr harten Material besteht, und
daß der Maschinentisch (2) oder der Träger (2) für jeden Zentrierzapfen (4; 27) eine Nut (6) aufweist.

11. Vorrichtung nach Anspruch 10, dadurch gekennzeichnet,
daß die Palette (1; 20; 32; 60; 70; 80) eine Mehrzahl von in einer Ebene angeordneten, in der Ebene gegeneinander winkelmäßig gleichmäßig beabstandeten Zentrierzapfen (4; 27) aufweist, und daß der Maschinentisch (2) oder Träger (2) eine der Anzahl der Zentrierzapfen (4; 27) entsprechende Anzahl von ebenfalls in einer Ebene angeordneten, gegeneinander winkelmäßig in der Ebene versetzten Nuten (6) aufweist.

12. Vorrichtung nach Anspruch 10 oder 11, dadurch gekennzeichnet,
daß der Zentrierzapfen (4; 27) mit einer in seiner Längsrichtung verlaufenden Aussparung (15) oder mit einem in seiner Längsrichtung verlaufenden Schlitz derart versehen ist, daß der Zentrierzapfen (4; 27) zwei gegeneinander in seiner Querschnittsebene federelastische Schultern (16) aufweist.

13. Vorrichtung nach einem der Ansprüche 10 bis 12, dadurch gekennzeichnet
daß der Maschinentisch zwei hydraulisch oder pneumatisch betätigbare Rastkörper (92) zum Festlegen der Palette (1; 20; 32; 60; 70; 80) aufweist,

daß der Maschinentisch (90) aus wenigstens zwei, sandwichartig übereinander angeordneten Teilen (95, 96, 97) besteht,
daß in einem der Teile (96, 97) ein Fluidröhrensystem (99, 100) zum Betätigen der Rastkörper (92) angeordnet ist, und
daß in dem anderen Teil (95) ein Fluidröhrensystem (98) zum Zuführen eines Abreinigungsfluides zu den Auflagestellen (101 bis 104) angeordnet ist.

## Claims

1. A method of producing a pallet which can be secured very precisely with respect to its spatial position when resting against a machine bench,
**characterized** by the following production steps:
   - metal diecasting, sintering or extrusion moulding of the pallet (1; 20; 32; 60; 70; 80) from a light metal, from brass, from a zinc alloy or from a sintered material, and
   - calibration of the pallet (1; 20; 32; 60; 70; 80) at least in the region of desired abutment faces (12 to 14) of the pallet with the machine bench (2) by pressing the pallet into a calibration tool which consists of a material harder than the material of the pallet and which is provided at least in the region of the abutment faces (12 to 14) with a negative shape with respect to the desired shape of the pallet (1; 20; 32), the pallet being subjected to a plastic material deformation at least in the region of the abutment faces (12 to 14).

2. A method according to Claim 1, **characterized in that** before or after the method step of calibration the surface of the pellet (1; 20; 32; 60; 70; 80) is further consolidated by a surface treatment at least in the region of the abutment faces (12 to 14) thereof.

3. A method according to Claim 2, **characterized in that** the surface treatment includes the application of a metal surface coating which is hard in comparison with the material of the pallet.

4. A method according to Claim 2, **characterized in that** the surface treatment includes the eloxation of the pallet (1; 20; 32; 60; 70; 80).

5. A method according to Claim 2, **characterized in that** the surface treatment includes a ball-polishing or shot-peening of the pellet (1; 20; 32; 60; 70; 80) at least in the region of the abutment faces (12 to 14; 44, 45) thereof with the machine bench.

6. A method according to any one of Claims 1 to 5, **characterized in that** the light metal is aluminium or an aluminium alloy.

7. A method according to any one of Claims 1 to 6, **characterized in that**
during the casting in the region of the abutment faces (12 to 14) the pallet (1; 20; 32; 60; 70; 80) is cast with an accuracy of approximately from 10 to 50 $\mu$m, preferably approximately 20 $\mu$m, and
the accuracy to shape of the abutment faces (12 to 14) lies in the range of between 1 and 5 $\mu$m, usually approximately 3 $\mu$m, after their plastic deformation by the calibration.

8. A method according to any one of Claims 1 to 3**, characterized in that** the surface treatment is produced by nickeling.

9. A method according to any one of Claims 1 to 8, **characterized in that** in the method step of calibration during the plastic deformation of the abutment faces (12 to 14) the first material is compressed in the region of the abutment faces.

10. A device with a pallet which can be secured with a high degree of accuracy with respect to its position when resting against a machine bench and which can be produced according to a method according to any one of Claims 1 to 9, **characterized in that**
the pallet (1; 20; 32; 60; 70; 80) is constructed in such a way that a workpiece (3) to be machined can be secured thereon,
at least one centring pin (4; 27), on which at least two abutment faces (12, 13) are formed, is provided on the pallet (1; 20; 32; 60; 70; 80),
the machine bench (2) consists of a very hard material with respect to the material of the pallet (1; 20; 32; 60; 70; 80), and
the machine bench (2) or the carrier (2) has a groove (6) for each centring pin (4; 27).

11. A device according to Claim 10, **characterized in that** the pallet (1; 20; 32; 60; 70; 80) comprises a plurality of centring pins (4; 27) arranged in one plane and spaced at uniform angles from one another in the plane, and the machine bench (2) or carrier (2) comprises a number of grooves (6) likewise arranged in one plane and offset at an angle with respect to one another in the plane, the number thereof corresponding to the number of the centring pins (4; 27).

12. A device according to Claim 10 or 11, **characterized in that** the centring pin (4; 27) is provided with a recess (15) extending in the longitudinal direction thereof or with a slot extending in the longitudinal direction thereof, in such a way that the centring pin (4; 27) has two shoulders (16) resilient against each other in its cross-sectional plane.

13. A device according to any one of Claims 10 to 12, **characterized in that**
the machine bench comprises two catch members (92) actuable hydraulically or pneumatically for securing the pallet (1; 20; 32; 60; 70; 80),
the machine bench (90) comprises at least two parts (95, 96, 97) arranged one above the other in the manner of a sandwich,
a fluid pipe system (99, 100) for actuating the catch members (92) is arranged in one of the parts (96, 97), and
a fluid pipe system (98) for supplying a cleaning fluid to the supporting positions (101 to 104) is arranged in the other part (95).

## Revendications

1. Procédé de fabrication d'une palette qui peut être positionnée dans l'espace avec grande précision en étant en appui contre une table de machine, caractérisé en ce qu'il comporte les étapes de fabrication suivantes:
   - coulage sous pression de métal, frittage ou filage pour réaliser la palette (1; 20; 32; 60; 70; 80) en un métal léger, en laiton, en un alliage de zinc, ou en un matériau fritté; et
   - calibrage de la palette (1; 20; 32; 60; 70; 80) au moins dans la zone des surfaces d'appui (12 à 14) souhaitées au moyen d'un enfoncement de la palette dans un outil de calibrage, outil qui est réalisé avec un matériau plus dur que le matériau de la palette et qui présente au moins dans la zone des surfaces d'appui (12 à 14) une forme qui est le négatif de la forme souhaitée pour la palette (1; 20; 32) la palette subissant, au moins dans la zone des surfaces d'appui (12 à 14), une déformation plastique du matériau.

2. Procédé selon la revendication 1, caractérisé en ce que avant ou après l'opération de calibrage, la surface de la palette (1; 20; 32; 60;

70; 80) est encore renforcée au moins dans la zone de ses surfaces d'appui (12 à 14) par un traitement de surface.

3. Procédé selon la revendication 2, caractérisé en ce que le traitement de surface comporte l'apport d'une couche superficielle métallique due par comparaison avec le matériau de la palette.

4. Procédé selon la revendication 2, caractérisé en ce que le traitement de surface comporte l'anodisation de la palette (1; 20; 32; 60; 70; 80).

5. Procédé selon la revendication 2, caractérisé en ce que le traitement de surface comprend un polissage par pluie de billes ou grenaillage de la palette (1; 20; 32; 60; 70; 80), au moins dans la zone de ses surfaces d'appui (12 à 14; 44; 45) contre la table de machine.

6. Procédé selon l'une des revendications 1 à 5, caractérisé en ce que l'alliage léger est de l'aluminium ou un alliage d'aluminium.

7. Procédé selon l'une des revendications 1 à 6, caractérisé en ce que, lors du coulage, la palette (1; 20; 32; 60; 70; 80) est coulée avec une précision d'environ 10 à 50 $\mu$m, habituellement d'environ 20 $\mu$m, dans la zone des surfaces d'appui (12 à 14) et que la précision de forme des surfaces d'appui (12 à 14) est habituellement de l'ordre de 1 à 5 $\mu$m, habituellement d'environ 3 $\mu$m, après leur déformation plastique par calibrage.

8. Procédé selon l'une des revendications 1 à 3, caractérisé en ce que la couche superficielle est obtenue par nickelage.

9. Procédé selon l'une des revendications 1 à 8, caractérisé en ce que lors de l'opération de calibrage, il se produit pendant la déformation plastique des surfaces d'appui (12 à 14) une densification du premier matériau dans la zone des surfaces d'appui.

10. Dispositif comportant une palette susceptible d'être positionnée en appui contre une table de machine avec grande précision, et susceptible d'être fabriquée selon un procédé correspondant à l'une des revendications 1 à 9, caractérisé en ce que:
    - la palette (1; 20; 32; 60; 70; 80) est conformée de façon telle que l'on puisse fixer sur elle une pièce à usiner (3),
    - au moins une broche de centrage (4; 27) est prévue sur la palette (1; 20; 32; 60; 70; 80) sur laquelle sont formées au moins deux surfaces d'appui (12, 13),
    - la table de machine (2) est constituée par un matériau très dur par rapport au matériau de la palette (1; 20; 32; 60; 70; 80), et
    - la table de machine ou le support (2) présente une gorge (6) pour chaque broche de centrage (4; 27).

11. Dispositif selon la revendication 10, caractérisé en ce que la palette (1; 20; 32; 60; 70; 80) présente une pluralité de broches de centrage (4; 27) coplanaires et espacées angulairement de façon uniforme les unes des autres dans ce plan et que la table (2) de machine ou le support (2) présente un nombre, correspondant au nombre de broches de centrage (4, 27) de gorges (6) également disposées dans un plan et décalées angulairement de façon uniforme.

12. Dispositif selon la revendication 10 ou 11, caractérisé en ce que la broche de centrage (4; 27) est munie d'un évidement (15) qui est disposé dans son sens longitudinal, ou d'une fente s'étendant dans son sens longitudinal, de façon telle que la broche de centrage (4; 27) présente deux épaulements (16) élastiques avec effet de ressort l'un par rapport à l'autre dans le plan de sa section transversale.

13. Dispositif selon l'une des revendications 10 à 12, caractérisé en ce que:
    - la table de machine présente deux corps d'encliquetage (92) susceptibles d'être actionnés hydrauliquement ou pneumatiquement pour la fixation de la palette (1; 20; 32; 60; 70; 80),
    - la table (90) de machine est constituée par au moins deux pièces (95, 96, 97) superposées en formant une structure sandwich,
    - dans l'une des pièces (96, 97), est disposé un système tubulaire (99, 100) pour fluide destiné à l'actionnement des corps d'encliquetage (92),
    - dans l'autre pièce (95), est disposé un système tubulaire (98) pour fluide destiné à amener un fluide de nettoyage aux emplacements d'appui (101 à 104).

EP 0 308 908 B1

FIG.1

FIG. 2

10

FIG.3

FIG.4

FIG.5

FIG.6

FIG.7

FIG.8

FIG.9

FIG.10

83e    83f

83g

83h

82
81
83d
83c

80

83a    83b

FIG. 11

81    82                80

84      85           85

FIG. 12

FIG. 13

FIG. 14

FIG. 15

17

FIG. 16

ABBLASEN

SCHLIESSEN

ÖFFNEN